(19) **Europäisches Patentamt**

**European Patent Office**

**Office européen des brevets**

(11) **EP 1 018 413 A1**

(12) **EUROPEAN PATENT APPLICATION**

(43) Date of publication:
**12.07.2000 Bulletin 2000/28**

(51) Int. Cl.[7]: **B27K 3/50**

(21) Application number: **99124843.6**

(22) Date of filing: **15.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.12.1998 JP 37694298**

(71) Applicants:
- **BAYER AG**
  **51368 Leverkusen (DE)**
- **OSHIKA SHINKO CO., LTD.**
  **Tokyo 173-0004 (JP)**

- **Kemiholz Co. Ltd.**
  **Kuse-gun, Kyoto 613 (JP)**

(72) Inventors:
- **Jaetsch, Thomas, Dr.**
  **50668 Köln (DE)**
- **Fushiki, Seiko**
  **Shimogyo-ku, 600-8178 Kyoto (JP)**
- **Saito, Takanobu**
  **650-0012 Kobe, Hyogo (JP)**
- **Katsuzawa, Yoshinaga**
  **Kodaira-shi, 187-0011 Tokyo (JP)**

(54) **Chemical formulations for incorporation into adhesives used in the production of wooden materials or wood composites**

(57) Formulations used for production of wooden material or wood composites containing monophenolic compounds are described.

**EP 1 018 413 A1**

**Description**

This invention relates to formulations used for production of wooden material or wood composites with anti-insect, anti-basidiomycetes, anti-termite and anti-fungal efficacy which plies were stuck with the adhesive incorporated with the invented chemical formulations and of wooden material or wood composites produced by using the adhesive incorporated with the invented chemical formulation.

It has been prevailed to treat wood and wooden buildings with anti-insect, anti-basidiomycetes, anti-termite and anti-fungal agents to protect them against fungi and insects.

These materials are in general treated by injecting the chemicals or by impregnating the material surface with the chemicals by pressure, brushing or soaking.

On the other hand, it is known to produce plywood and LVL boards etc. with anti-insect, anti-basdiomycetes, anti-termite and anti-fungal efficacy using the adhesive incorporated with anti-insect, anti-basdiomycetes, anti-termite and anti-fungal agents, for example by producing plywood by sticking plural wood boards and by producing LVL by sticking single wood boards in parallel with the direction of wood fibers.

In the latter, efficacy is shown by incorporation of the formulation into the adhesives, while in the former, efficacy is given by the formulation itself being applied by injection etc. into the wood material directly. Therefore, it is generally considered that the chemical formulations suitable for the former application method cannot necessarily be applied to the latter application method in many cases. Especially in the latter, such as difficult problem occasionally occurs that much higher rates of the chemical formulation is need to be incorporated in the adhesive to attain the originally expected efficacy because the chemical often cannot disperse enough to achieve sufficient efficacy because of clathration of the chemical in the adhesive.

In fact, anti-insect plywood has been standardized in Japan Agriculture Standard(JAS). For example, plywood products which are produced with the adhesive incorporated with Chlorpyrifos, Fenitrothion, Phoxim, Dichlorofenthion and so on have been approved. While, for plywood with anti-insect, anti-basidiomycetes, anti-termite and anti-fungal efficacy, the chemical formulations containing two or more active ingredients are used for adhesive incorporation. But in case of such existing formulations, there is a problem indicated that much higher rates of formulation need to be incorporated to attain the originally expected efficacy because of insufficient efficacy caused by clathration of the chemicals in the adhesive.

In this connection, as described below in the examples of comparison, recovery rates of the chemicals from plywood which was produced using the adhesive incorporated with the existing chemical formulations have been determined by gas chromatography to investigate the rate of chemicals required for achieving the prescribed efficacy, but it resulted in low collection ratio.

This invention aims to supply the technique by which the disadvantages of the above mentioned existing technique can be dissolved.

In the chemical formulations used in production process of wooden materials and wood composites with anti-insect, anti-basidiomycetes, anti-termite and anti-fungal efficacy given by sticking the plies with the adhesive incorporated with anti-insect, anti-basidiomycetes, anti-termite and anti-fungal agents, the invention relates to chemical formulations for incorporation into adhesives which are used for production of wooden materials and wood composites characterized by containing phenolic compounds and other anti-insect, anti-basidiomycetes, anti-termite and anti-fungal agents than the phenolic compounds.

The present invention relates to the following items:

(1) Among the chemical formulations used in the production of wooden materials and wood composites with anti-insect, anti-basidiomycetes, antitermite and anti-fungal efficacy given by piling the plies wit the adhesive incorporated with anti-insect, anti-basidiomycetes, anti-termite and anti-fungal agents, the invented chemical formulations for incorporation into adhesives are formulations which are used for production of wooden materials and wood composites characterized by containing phenolic compounds and other anti-insect, anti-basidiomycetes, anti-termite and anti-fungal agents than the phenolic compounds.

(2) Chemical formulations characterized by containing monophenol derivatives as phenolic compounds among the chemical formulations described in Item (1).

(3) Chemical formulations characterized by containing 2-phenyl phenol as a monophenol derivative among the chemical formulations described in Item (2).

(4) Chemical formulations characterized by containing 3-methyl-4-chlorophenol as a monophenol derivative among the chemical formulations described in Item (2).

(5) Chemical formulations characterized by containing 2-nonyl-phenol as a monophenol derivative among the chemical formulations described in Item (2).

The details of this invention are explained in the following.

As mentioned above and as described in the below mentioned examples of comparison, recovery rates of the chemicals from plywood which was produced using the adhesive incorporated with the existing chemical formulations have been determined by gas chromatography to investigate the efficacy of the above mentioned chemical formulation and the rate of chemicals required for achieving the prescribed efficacy, but it resulted in very low collection ratio. It has been found that the recovery rate could be remarkably improved by combining phenolic compounds with the existing chemicals. It has been noticed that the combination enabled the formulation to give sufficient efficacy by preventing it from being clathrated in the adhesive, and at the same time, better efficacy could be achieved at the same level of application rate.

As examples of adhesives used in this invention, urea resin, melamine-urea copolymer resin, phenol resin, phenol melamine resin, resorcinol resin, water-based high polymer isocyanate, vinyl acetate resin emulsion, modified vinyl acetate resin emulsion, epoxy resin, urethane resin, α-olefin maleic anhydride resin etc. based adhesives are listed. In addition, natural substances based adhesives and elastomer type adhesives can also be used.

As examples phenolic compounds used in this invention, phenol and monophenol derivatives can be quoted.

As typical examples of mono-phenol derivatives, 2-phenylphenol, 3-methyl-4-chlorophenol and 2-nonylphenol can be quoted.

As examples of anti-insect, anti-basidiomycetes, anti-termite and anti-fungal agents used in combination with phenol derivatives in this invention, the following can be listed.

(1) Examples of anti-basidiomycetes agents

Copper naphtenate, zinc naphtenate
chloronaphthalene
p-chlorophenyl-3 -iodinepropargylformal (IF- 1000), 3-brom-2,3-diiodo-2-propenylethylcarbamate (Sanplas), 3-Iodo-2-propynylbutylcarbamate (Troysan), 1-(Diiodomethyl)sulfonyl-4-methylbenzene (Amical), N-nitroso-cyclohexylhydroxylaminealuminum (Xylazan Al), N-cyclohexyl-N-methoxy-2,5-dimethyl-3-furancarboxyamide (Xylazan B), N-cyclohexyldiazenium-dioxypotassium (Xyalzan K-7), N,N-Dimethyl-N'-phenyl-(N'-fluorodichloro-methylthio)sulfamide (Xylazan BD) 2-(4-Thiazolyl)-1H-benzimidazole (Thiabendazole), 2-Mercaptobenzothiazole (Mercaptobenzothiazole),

(2) Examples of wood anti-fungal agents

Thiabendazole (TBZ), Methylbenzimidazole-2-carbamate (Carbendazim), Methyl-1-(butylcarbamoyl)benzimidazole-2-carbamate (Benomil), N-(Trichloromethylthio)phthalimide (Folpet), N,N-Dimethyl-N'-phenyl-(N'-fluorodichloromethylthio) sulfamide, 2,4,5,6-Tetrachloroisophthalonitrile (Daconil), 8-Oxiquinoline copper, 2-(Thiocyanomethylthio)benzothiazole (TCMTB), Propiconazole, Tebuconazole, Cyproconazole, Hexaconazole, Sanplas, Methylenebis-thiocyanate (MBT)

(3) Examples of anti-insect and anti-termite agents

Chlorpyrifos, Phoxim, Propetanfos, Pyridafenthion, Tetrachlorbinfos, Fenitrothion, Dichlorofenthion, 2-Isopropoxyphenol-N-methylcarbamate (Propoxur), 2-sec-butylphenyl-N-methylcarbamate (Bassa), Carbaryl, Allethrin, Permethrin, Cypermethrin, Fenvalerate, Detamethrin, Resmethrin, Phenothrin, Tralomethrin, Bifenthrin, Cyfluthrin, Etofenprox, Tripropyl-isocyanurate, Silafluofen, Imidachloprid, Octachlorodipropylether, Fipronil, Chlorfenapyr, Acetamiprid.

The appropriate combination ratio of the phenolic compounds and the anti-insect, anti-basidiomycetes, anti-termite and anti-fungal agents, is, phenolic compounds: other anti-insect, antbasidiomycetes, anti-termite, anti-fungal compounds is usually in the range of 0.1-10.0:1.0.

In this invention, the technique aims to acquire wooden materials and wood composites with anti-insect, anti-basidiomycetes, anti-termite and anti-fungal efficacy not by injecting or surface treating under pressure or by brushing or soaking the phenolic compounds or other anti-insect, anti-basidiomycetes, anti-termite and anti-fungal agents in single formulations or in combinations but by sticking the plies with the adhesives incorporated with the organic phenol compounds and the other anti-insect, anti-basidiomycetes, anti-termite and anti-fungal agents in combinations.

Accordingly, even if some of the above mentioned organic phenol compounds and other anti-insect, anti-basidiomycetes, anti-termite, anti-fungal agents show chemical efficacy by injecting or surface treating under pressure or by brushing or soaking, it does not mean immediately that those compounds can be applied to such application method as the method of adhesive incorporation mentioned in this invention.

This invention is to produce wooden materials and wood composites with anti-insect, anti-basidiomycetes, anti-termite and anti-fungal efficacy by sticking the plies with the adhesives incorporated with the phenolic compounds and the other anti-insect, anti-basidiomycetes, anti-termite and anti-fungal agents in combinations. There is a case in which the adhesive is used only for adhering without piling plies such as the case of adhering flat materials to frames. Such case is also included in this invention.

As examples of the mentioned wooden materials, plywood, LVL, laminated wood (products produced by adhering sawn lumbers or small square timbers in the directions of length, width and thicknesses so that the fiber directions of components become parallel to each other), fiber boards (board shape products produced by molding wood fiber and other plant fibers as main materials), particle boards (board shape products produced by artificially molding wood and other plant fiber fragments with adhesives), wooden panels (panels produced by adhering flat materials to frames) and so on are listed.

And as examples of wood composites, various material which are produced by adhering unwoven clothes, paper, plastics like PVC, metals like copper, aluminum, iron, stainless steel etc. to wood materials (including veneers and green wood) are listed.

## Example of execution

This invention is explained referring to the examples of execution as follows. This invention is not limited at all by these examples of execution.

## Example of execution 1

Melamine urea copolymer resin based adhesive was used as an adhesive for production of 4 mm thick 3 ply plywood using veneers of Red meranty (0.8 mm, 2.4 mm thickness).

The formulation composed of 3% Imidachloprid, 20% IPBC, 15% 2-phenyphenol and 62% other components (solvents) was incorporated in the adhesive. Concerning combination ratios, the above mentioned formulation was added to the adhesive at 1.86, 2.13, 2.40 and 2.67 parts in weight in 100 parts in weight of melamine urea co-polymer resin adhesive (Product name: Oshika Resin PWP-60, Oshika Shinko), 18 parts in weight of flour, 12 parts in weight of water and 1 part in weight of hardening agent so that the finished plywood contain 1400 $g/m^3$, 1600 $g/m^3$, 1800 $g/m^3$ and 2000 $g/m^3$ of the formulation. A plywood was produced by coating the adhesive formulation at 36 g/900 $cm^2$.

This plywood was tested in accordance with below mentioned test method to check anti-termite efficacy (average weight loss) by measuring % weight loss in the lab. the test result is shown in Table 1.

1. Prepare each 5 test pieces of treated and untreated plywood with size of 20 $\pm$ 0.5 mm (length) x 10 $\pm$ 0.5 mm (width) and dry them in thermostatic equipment at 60 $\pm$ 2 degree C for 48 hours.

2. After letting them in desiccator for ca. 30 minutes, measure weight ($W_1$) of each piece until the order of 0.01 g.

3. Arrange cylindrical acrylic resin with 8 cm of diameter and 6 cm of height one side of which is solidified with hard plaster (This is made by adding 24 ml of water to 100 g of hard plaster powder for dental use and is poured into cup after mixing for ca. 30 seconds.) as much as ca. 5 mm in the thickness. And place 10-15 of the vessel in a container with a lid (Small hole must be made in advance for ventilation.) on which ca. 2 cm thick cotton (Absorbent cotton with water at 130-150 g/100 g the cotton) is laid.

4. Place each test piece horizontally on the hard plaster of the vessel and put 150 worker-termites and 15 soldier-termites taken out at random on the breeding vessel. Keep the container with lid at dark place for 21 days at 28 $\pm$ 2°C.

5. After breeding for 21 days, take out each test piece from breeding vessels and after removing deposit on the surface politely, dry them at 60 $\pm$ 2°C for 48 hours.

6. After letting them in desiccator for ca. 30 minutes, measure weight ($W_2$) of each piece until the order of 0.01 g.

7. Calculate % weight loss of each test piece by following formula and the calculate average weight loss of 5 test pieces.

$$\% \text{ Weight loss} = \frac{W_1 - W_2}{W_1} \times 100$$

And, in accordance with JAS for normal plywood, measurement of collection ratio of chemical formulation was done by gas chromatography. The result is shown in table 2.

In addition, the test on adhesive strength was done in accordance with JAS for normal plywood. The result is shown in Table 3.

**Example of comparison 1**

A plywood was prepared and tested in the same way as Example of execution 1 with exception that the adhesives without any chemical formulations (control) and with chemical formulation (Kemiholzply CTI-2:Imidachloprid 3%, IPBC 20%, IF-1000 15%, others(solvent) 62% were used. The results are shown in Table 1 to 3.

**Example of execution 2**

A press formed particleboard was prepared by spraying the adhesive composed of 630 parts in weight of chips of radiatapine, 63 parts in weight (as solid) of urea resin adhesive (Oshikaresin 171 made by Oshika Shinko Co., Ltd.), 3 parts in weight of paraffin wax, 1 part in weight of hardener (ammonium chloride) and 0.63 parts in weight of chemical formulation (10% of Thiabendazole (TBZ), 10% of 3-methyl-4-chlorophenol and 80% of other (solvent)).

The trial on fungicidal effect of the particle board was done in accordance with JWPA Standard No. 2 (Test method of fungicidal efficacy of fungicide for wood). The result is shown in Table 4.

**Example of comparison 2**

A press formed particleboard was prepared by spraying adhesive composed of 630 parts in weight of chips of radiata pine, 63 parts in weight (as solid) of urea resin adhesive (Oshikaresin 171 made by Oshika Shinko Co., Ltd.), 3 parts in weight of paraffin wax, 1 part in weight of hardener (ammonium chloride) and 0.63 parts in weight of chemical formulation [Kemiboard TF:20 20% of Thiabendazole (TBZ) and 80% of other (solvent)].

And, a press formed particleboard was prepared by spraying the adhesive without the chemical formulation as control.

The trial on fungicidal effect of the particle board was done in accordance with JWPA Standard No. 2 (Test method of fungicidal efficacy of fungicide for wood). The result is shown in Table 4.

Table 1 shows the following. That is, % weight loss shown in Table 1 is the value of weight loss measured by damage on plywood left under existence of termite. As figures from example of execution show, adhesive with phenolic compounds in combination with anti-insect, anti-basidiomycetes, anti-termite and anti-fungal agents showed lower % weight loss, and lower % weight loss by damage consequently means that it has superior termiticidal efficacy compared with the example of comparison.

And Table 2 shows the following. That is, as per the example of comparison, in case of chemical formulation for adhesive incorporation for plywood composed of Imidachloprid (insecticide and termiticide), IPBC (organic iodine type fungicide for wood), IF- 1000 (organic iodine type fungicide for wood) and solvent, its recovery rate determined by gas chromatography was rather low and sufficient efficacy was not achieved since the chemical formulation was chlathrated by the adhesive and it was not fully dispersed in the adhesive. To the contrary, as mentioned in the example of execution in this invention, in case of chemical formulation containing 2-phenylphenol instead of IF-1000, i.e. combination of the phenolic compound and Imidachloprid (insecticide and termiticide) and IPBC (organic iodine type fungicide for wood), it was shown that the recovery rate was drastically improved to almost 100%.

In addition, Table 3 shows the following. That is, as mentioned in the example of execution in this invention, even in case of chemical formulation containing 2-phenylphenol instead of IF-1000 i.e. combination of the organic phenolic compound and Imidachloprid (insecticide and termiticide) and IPBC (organic iodine type fungicide for wood), its adhesive strength was almost the same as the example of comparison. Therefore, there is no unfavorable influence on adhesive strength by the replacement.

And further, from the result shown in Table 4, the example of execution in this invention showed better fungicidal efficacy than the example of comparison.

### Example of Execution 3

Piling up veneers of Douglas fir with thickness of 2 mm, laminated veneer lumber (LVL) with thickness of 38 mm was made. As to binder resin, it was composed of 100 parts in weight of phenol resin, 8 parts in weight of hardener (Sodium Carbonate), 10 parts in weight of flour and 1.95 parts in weight of chemical formulation [25% of Chlorpyrifos, 15% of IPBC, 15% of o-phenylphenol of 45% of others (solvent)] and was applied at the rate of 38 g/900 cm$^2$. The LVL contained 1,6000 g/m$^3$. And by increasing volume of the chemical formulation to 2.44 part in weight, LVL with 2,000 g/m$^3$ of chemical formulation was also prepared. By using the plywood, weight loss was measured in the field test in accordance with JWPA Standard No. 12 (Test method of termiticidal efficacy of wood termiticide for treatment. The result is shown in Table 5.

And measurement of collection ratio of the chemical formulation was done by gas chromatography in accordance with JAS for normal plywood. The result is shown in Table 6.

### Comparison example 3

Piling up veneers of Douglas fir with thickness of 2 mm, laminated veneer lumber (LVL) with thickness of 38 mm was made. As to binder resin, it was composed of 100 parts in weight of phenol resin, 8 parts in weight of hardener (Sodium Carbonate), 10 parts in weight of flour and 1.95 parts in weight of chemical formulation [Kemiholzply FTP made by Kemiholz Co., Ltd.; 25% of Chlorpyrifos, 40% of IPBC and 35% of others (solvent)] and was applied at rate of 38 g/900 cm$^2$. The LVL contained 1,600 g/m$^3$. And by increasing volume of chemical formulation to 2.44 parts in weight, LVL with 2,000 g/m$^3$ of the chemical formulation was also prepared.

By using the plywood, weight loss was measured in the field test in accordance with JWPA Standard No. 12 (Test method of termiticidal efficacy of wood termiticide for pressure treatment. The result is shown in Table 5.

And measurement of collection ratio of the chemical formulation was done by gas chromatography in accordance with JAS for normal plywood. The result is shown in Table 6.

### Example of execution 4

By adhering a slice veneer with adhesive incorporating the chemical formulation, decorative plywood with the slice veneer with anti-insect and anti-basidiomycetes efficacy was produced under the following condition, and a test on anti-insect efficacy in accordance with JWPA Standard No. 8 (Test method of insecticidal efficacy of insecticide for wood) was carried out.

The adhesive solution was prepared with 100 parts in weight of vinylacetate emulsion type adhesive (Shinkobond 36 made by Oshika Shinko Co., Ltd.), 35 parts in weight of flour, 69 parts in weight of water and 2 parts in weight of chemical formulation (30% of Chlorpyrifos, 20% of o-phenylphenol and 50% of solvent) and was uniformly applied on five-layered lauan plywood of which thickness is 12 mm and thickness of surface veneers is 0.7 mm at volume of 150 g/m$^2$. And it was put over the slice veneer made from Japanese oak with thickness of 0.25 mm and water content of 80-100% on it and water was sprayed on the slice veneer until water drops are formed on the surface. After piling up for 90-100 sec., adhesion was done at temperature of 110°C and pressure of 7-8 kg/cm$^2$.

The result is shown in Table 7.

### Example of comparison 4

By adhering a slice veneer with adhesive incorporating the chemical formulation, decorative plywood with the slice veneer with anti-insect and anti-basidiomycetes efficacy was produced under the following condition, and a test on insecticidal efficacy in accordance with JWPA Standard No. 8 (Test method of insecticidal efficacy of insecticide for wood) was carried out.

The adhesive solution was prepared with 100 parts in weight of vinylacetate emulsion type adhesive (Shinkobond 36 made by Oshika Shinko Co., Ltd.), 35 parts in weight of flour, 69 parts in weight of water and 2 parts in weight of chemical formulation (30% of Chlorpyrifos and 70% of solvent) and was uniformly applied on five-layered lauan plywood of which thickness is 12 mm and thickness of surface veneers is 0.7 mm at volume of 150 g/m$^2$. And it was put over the slice veneer made from Japanese oak with thickness of 0.25 mm and water content of 80-100% and water was sprayed on the slice veneer until water drops are formed on the surface. After piling up for 90-100 sec., adhesion was done at temperature of 110°C and pressure of 7-8 kg/cm$^2$.

The result is shown on Table 7.

### Example of execution 5

For insecticidal treatment of the backside of plywood, the mixing solution composed of 50 parts in weight of water, 50 parts in weight of formalinchatcher (Nonfor FC-1 made by Kemiholz Co., Ltd.) and 1.82 parts in weight of chemical formulation [5% of Bifenthrin, 5% of 2-nonylphenol and 90% of others (solvent)] was applied on the backside of the decorative plywood with a slice veneer prepared at example of comparison 4 at the volume of 55 g/m$^2$.

Measurement of collection ratio of the chemical formulation from the plywood was done in accordance with JAS for normal plywood. The result is shown in Table 8.

### Comparison example 5

For insecticidal treatment of the backside of plywood, the mixing solution composed of 50 parts in weight of water, 50 parts in weight of formalinchatcher (Nonfor FC-1 made by Kemiholz Co., Ltd.) and 1.82 parts in weight of chemical formulation [Kemiholzwoody EW-B made by Kemiholz Co., Ltd.: 5% of Bifenthrin and 95% of others (solvent)] was applied on the backside of the decorative plywood with a slice veneer prepared at the example of comparison 4 at the volume of 33 g/m$^2$.

Measurement of collection ratio of the chemical formulation from the plywood was done in accordance with JAS for normal plywood. The result is shown in Table 8.

Table 5 shows the followings. As figures from the example of execution, adhesive with phenolic compounds in combination with anti-insect, anti-basidiomycetes, anti-termite and anti-fungal agents showed lower % weight loss and lower % weight loss by damage consequently means that it has superior termiticidal efficacy compared with the example of comparison.

And Table 6 shows the followings. As mentioned in the example of execution in this invention, by adding 2-phenylphenol to combination of Chlorpyrifos (organic phosphate type insecticide and termitice) and IPBC (organic iodine type fungicide for wood), the collection ratio was drastically improved up to around 100%. And from the result of the collection ratio, in the example of execution, it is shown that clathration of the chemical formulation with adhesive was avoided and enough efficacy was achieved by being dispersed sufficiently consequently enough efficacy was obtained even at lower dosage of the chemical formulation.

Table 7 shows the followings. As mentioned in example of the execution in this invention, by adding o-phenylphenol to Chlorpyrifos (organic phosphate type insecticide and termiticide), the insecticidal efficacy was improved.

Table 8 shows the followings. As mentioned in the example of execution in this invention, by adding 2-nonylphenol to Bifenthrin (pyrethroid type insecticide and termiticide), the collection ratio was drastically improved up to around 100%. And from the result of the collection ratio, in the example of execution, it is shown that chlathration of the chemical formulation with adhesive was avoided and enough efficacy was achieved by being dispersed sufficiently, consequently enough efficacy was observed even at lower dosage of the chemical formulation.

As mentioned in this invention, by combining phenolic type compounds with anti-insect, anti-basidiomycetes, anti-termite and anti-fungal agents, % weight loss is lower and lower % weight loss by damage consequently superior anti-insect, anti-basidiomycetes, anti-termite and anti-fungal efficacy is expected. And collection ratio of the chemicals is drastically improved up to around 100%. And in accordance with this invention, clathration of the chemicals with adhesive is avoided. Consequently the formulation is sufficiently dispersed and then enough efficacy is achieved. It means that enough efficacy can be obtained even at lower volume of the chemical formulation.

Table 1

| Test piece | No. | Weight before test (g) | Weight after test (g) | Weight loss (%) | Average (%) |
|---|---|---|---|---|---|
| **Example of execution 1** | | | | | |
| Content of the chemical 1,400 g/m$^3$ | 1 | 0.65 | 0.57 | 3.08 | 3.03 |
| | 2 | 0.66 | 0.57 | 3.03 | |
| | 3 | 0.67 | 8.84 | 2.99 | |
| Content of the chemical 1,600 g/m$^3$ | 1 | 0.72 | 0.70 | 2.78 | 2.34 |
| | 2 | 0.71 | 0.69 | 2.82 | |
| | 3 | 0.71 | 0.70 | 1.41 | |
| Content of the chemical 1,800 g/m$^3$ | 1 | 0.74 | 0.72 | 2.70 | 1.82 |
| | 2 | 0.71 | 0.70 | 1.41 | |
| | 3 | 0.74 | 0.73 | 1.35 | |
| Content of the chemical 2,000 g/m$^3$ | 1 | 0.74 | 0.73 | 1.35 | 1.35 |
| | 2 | 0.78 | 0.71 | 1.28 | |
| | 3 | 0.71 | 0.70 | 1.41 | |
| **Example of comparison 1** | | | | | |
| Control | 1 | 0.70 | 0.36 | 48.57 | 46.40 |
| | 2 | 0.69 | 0.37 | 47.38 | |
| | 3 | 0.74 | 0.42 | 43.24 | |
| CTI-2 1,400 g/m$^3$ | 1 | 0.74 | 0.71 | 4.05 | 3.59 |
| | 2 | 0.79 | 0.68 | 2.88 | |
| | 3 | 0.78 | 0.75 | 3.85 | |
| CTI-2 1,600gm$^3$ | 1 | 0.77 | 0.74 | 3.90 | 3.11 |
| | 2 | 0.79 | 0.77 | 2.53 | |
| | 3 | 0.69 | 0.67 | 2.90 | |
| CTI-2 1,800 g/m$^3$ | 1 | 0.78 | 0.78 | 2.56 | 2.55 |
| | 2 | 0.79 | 0.77 | 2.53 | |
| | 3 | 0.76 | 0.76 | 2.56 | |
| CTI-2 2,000 g/m$^3$ | 1 | 0.79 | 0.78 | 1.27 | 2.09 |
| | 2 | 0.79 | 0.77 | 2.53 | |
| | 3 | 0.81 | 0.79 | 2.47 | |

Table 2

| Dosage (g/m$^3$) | Component | Analytical result (%) | Content (kg/m$^3$) | Theoretical volume (kg/m$^3$) | Collection ratio (%) |
|---|---|---|---|---|---|
| **Example of execution 1** | | | | | |
| 1,400 g/m$^3$ | IMD | 0.0086 | 0.0432 | 0.0420 | 102.9 |
| | IPBC | 0.0574 | 0.2882 | 0.2882 | 102.7 |
| | OPP | 0.0484 | 0.2430 | 0.2430 | 115.7 |
| 1,600 g/m$^3$ | IMD | 0.0100 | 0.0495 | 0.0480 | 103.1 |
| | IPBC | 0.0624 | 0.3088 | 0.3200 | 96.5 |
| | OPP | 0.0508 | 0.2514 | 0.2400 | 104.8 |
| 1,800 g/m$^3$ | IMD | 0.0114 | 0.0591 | 0.0540 | 109.4 |
| | IPBC | 0.1694 | 0.3596 | 0.3600 | 99.9 |
| | OPP | 0.0562 | 9.2912 | 0.2700 | 107.9 |
| 2,000 g/m$^3$ | IMD | 0.0114 | 0.0622 | 0.0600 | 103.7 |
| | IPBC | 0.0754 | 0.4112 | 0.4000 | 102.8 |
| | OPP | 0.654 | 0.3586 | 0.3000 | 118.9 |
| **Example of comparison 1** | | | | | |
| CTI-2 1,400 g/m$^3$ | IMD | 0.0054 | 0.0259 | 0.0420 | 64.0 |
| | IPBC | 0.0388 | 0.1935 | 0.2800 | 69.1 |
| | IF-1000 | 0.0374 | 0.1665 | 0.2100 | 68.8 |
| CTI-2 1,600 g/m$^3$ | IMD | 0.0062 | 0.0294 | 0.0480 | 61.3 |
| | IPBC | 0.0480 | 0.2273 | 0.3200 | 71.0 |
| | IF-1000 | 0.0434 | 0.2055 | 0.2400 | 85.6 |
| CTI-2 1,800 g/m$^3$ | IMD | 0.0052 | 0.0287 | 0.0540 | 53.1 |
| | IPBC | 0.0382 | 0.2109 | 0.3600 | 55.6 |
| | IF-1000 | 0.0336 | 0.1855 | 0.2700 | 68.7 |
| CTI-2 2,000 g/m$^3$ | IMD | 0.068 | 0.0355 | 0.0600 | 59.2 |
| | IPBC | 0.0460 | 0.2399 | 0.4000 | 60.0 |
| | IF-1000 | 0.0438 | 0.2284 | 0.3000 | 76.1 |
| Remarks: IMD : Imidachboprid OPP : o-Phenylphenol | | | | | |

Table 3

| Test piece | No weathering | | Repeated boiling | |
|---|---|---|---|---|
| | Adhesive strength kg/cm$^2$ | Damage rate (%) | Adhesive strength (kg/cm$^2$) | Damage rate (%) |
| **Example of execution 1** | | | | |
| 1,400 g/m$^3$ | 13.2 | 97 | 10.1 | 25 |
| 1,600 g/m$^3$ | 13.5 | 95 | 9.9 | 31 |
| 1,800 g/m$^3$ | 13.1 | 93 | 9.9 | 24 |
| 2,000 g/m$^3$ | 13.0 | 94 | 10.2 | 23 |
| **Example of comparison 1** | | | | |
| Control | 13.4 | 96 | 10.3 | 29 |
| CTI-2 1,400 g/m$^3$ | 13.6 | 92 | 9.8 | 35 |
| CTI-2 1,600 g/m$^3$ | 13.4 | 95 | 10.4 | 25 |
| CTI-2 1,800 g/m$^3$ | 12.9 | 89 | 10.1 | 22 |
| CTI-2 2,000 g/m$^3$ | 13.1 | 90 | 9.9 | 24 |

Table 4

| | Average evaluation against each microorganisms | | | | | S | D | Remarks |
|---|---|---|---|---|---|---|---|---|
| | $A_1$ | $A_2$ | $A_3$ | $A_4$ | $A_5$ | | | |
| Example of execution 2 | 0 | 0 | 0 | 0 | 0 | 0 | 0 | |
| Example of comparison | 0 | 0 | 1 | 0 | 1 | 2 | 13 | |
| Control | 3 | 3 | 3 | 3 | 3 | 15 | 100 | |
| Remarks: $A_1$: *Aspergillus niger* $A_2$: *Penicillium funicolosum* $A_3$: *Rhizopus javanicus* $A_4$: *Aureobasidium pullulans* $A_5$: *Gliocladium virens* | | | | | | | | |

Table 5

| Test piece | No. | Weight before test (g) | Weight after test (g) | Weight loss (%) | Average (%) |
|---|---|---|---|---|---|
| **Example of execution 3** | | | | | |
| 1,600 g/m$^3$ | 1 | 35.625 | 34.570 | 2.96 | 1.81 |
| | 2 | 37.376 | 36.635 | 1.98 | |
| | 3 | 35.137 | 34.785 | 1.00 | |
| | 4 | 35.937 | 35.467 | 1.31 | |
| 2,000 g/m$^3$ | 1 | 37.645 | 37.345 | 1.32 | 1.50 |
| | 2 | 35.855 | 35.351 | 1.41 | |
| | 3 | 37.965 | 37.448 | 1.36 | |
| | 4 | 36.734 | 36.034 | 1.91 | |
| **Example of comparison 3** | | | | | |
| Control | 1 | 37.812 | 11.593 | 69.34 | 55.42 |
| | 2 | 38.020 | 18.608 | 57.09 | |
| | 3 | 35.520 | 16.787 | 52.80 | |
| | 4 | 37.629 | 21.660 | 42.44 | |
| FTP 1,600g/m$^3$ | 1 | 15.322 | 14.681 | 4.18 | 5.39 |
| | 2 | 16.021 | 15.026 | 6.21 | |
| | 3 | 14.691 | 13.726 | 6.57 | |
| | 4 | 15.052 | 14.361 | 4.59 | |
| FTP 2,000 g/m$^3$ | 1 | 15.201 | 14.644 | 3.66 | 4.96 |
| | 2 | 14.751 | 13.653 | 5.41 | |
| | 3 | 15.625 | 14.705 | 5.89 | |
| | 4 | 14.322 | 13.625 | 4.87 | |

Table 6

| Dosage (g/m$^3$) | Component | Analytical result (%) | Content (kg/m$^3$) | Theoretical value (kg/m$^3$) | Collection ratio (%) |
|---|---|---|---|---|---|
| **Example of execution 3** | | | | | |
| 1,600 g/m$^3$ | CP | 0.0822 | 0.4072 | 0.4000 | 101.6 |
| | IPBC | 0.0483 | 0.2400 | 0.2400 | 99.6 |
| | OPP | 0.0515 | 0.2400 | 0.2400 | 106.3 |
| 2,000 g/m$^3$ | CP | 0.0949 | 0.5180 | 0.5000 | 103.6 |
| | IPBC | 0.0572 | 0.3123 | 0.3000 | 104.1 |
| | OPP | 0.0589 | 0.3210 | 0.3000 | 107.0 |
| **Example of comparison 3** | | | | | |
| 1,600 g/m$^3$ | CP | 0.0500 | 0.2356 | 0.4000 | 58.9 |
| | IPBC | 0.0828 | 0.3928 | 0.6400 | 62.3 |
| 2,000 g/m$^3$ | CP | 0.0623 | 0.3250 | 0.5000 | 65.0 |
| | IPBC | 0.0974 | 0.5064 | 0.8000 | 63.3 |
| Remarks: CP: Chlorpyrifos OPP: o-Phenylphenol | | | | | |

Table 7

| | Number of insects generated | Remarks |
|---|---|---|
| Exmaple of execution 4 | 0 | |
| Example of comparison 4 | 30 | |

Table 8

| | Content of Bifenthrin (g/m$^3$) | Content of 2- Nonylphenol (g/m$^3$) |
|---|---|---|
| Example of execution 5 | 0.056 | 0.055 |
| | 0.051 | 0.059 |
| | 0.050 | 0.051 |
| | 0.054 | 0.053 |
| Example of comparison 5 Kemiholzwoody EW-B | 0.029 | - |
| | 0.030 | - |
| | 0.031 | - |
| | 0.030 | - |

**Claims**

1. Formulations which are used for production of wooden materials and wood composites characterized by containing phenolic compounds and other anti-insect, anti-basidiomycetes, anti-termite and anti-fungal agents than the phenolic compounds.

2. Chemical formulations characterized by containing monophenol derivatives as phenolic compounds among the chemical formulations described in claim 1.

3. Chemical formulations characterized by containing 2-phenyl phenol as a monophenol derivative among the chemical formulations described in claim 2.

4. Chemical formulations characterized by containing 3-methyl-4-chlorophenol as a monophenol derivative among the chemical formulations described in claim 2.

5. Chemical formulations characterized by containing 2-nonyl-phenol as a monophenol derivative among the chemical formulations described in claim 2.

**European Patent Office**

## EUROPEAN SEARCH REPORT

Application Number

EP 99 12 4843

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 571 846 A (BAYER AG) 1 December 1993 (1993-12-01) * page 2, column 26-55 * * page 3, line 13-22 * * page 3, line 44 - page 4, line 56 * * page 8; example 8 * | 1-4 | B27K3/50 |
| X | FR 1 600 399 A (SOCIETE DE PRODUITS CHIMIQUES D'AUBY) 20 July 1970 (1970-07-20) * page 2, line 4-28 * * page 3, line 28-30 * * claims * | 1,2 | |
| X | DATABASE WPI Section Ch, Week 198035 Derwent Publications Ltd., London, GB; Class A14, AN 1980-61506C XP002133496 & JP 55 094977 A (SANYO MOKUZAI BOFU KK), 18 July 1980 (1980-07-18) * abstract * | 1-3 | |
| X | US 5 730 907 A (NICHOLAS DARREL D ET AL) 24 March 1998 (1998-03-24) * column 2, line 20-33 * * column 3, line 32-44 * * column 8, line 43-58 * * claims * | 1,2,5 | TECHNICAL FIELDS SEARCHED (Int.Cl.7) B27K B27G B27D B27M C09D |
| X | DE 41 22 654 A (BAYER AG) 14 January 1993 (1993-01-14) * page 2, column 67 - page 3, column 56 * * column 8, line 43-58 * * claims * | 1-3 | |

-/—

The present search report has been drawn up for all claims

| Place of search | Date of completion of the search | Examiner |
|---|---|---|
| THE HAGUE | 20 March 2000 | Dalkafoukl, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**EUROPEAN SEARCH REPORT**

Application Number

EP 99 12 4843

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199214<br>Derwent Publications Ltd., London, GB;<br>Class C03, AN 1992-110107<br>XP002133497<br>& JP 04 052101 A (FUKUBI CHEM IND CO LTD),<br>20 February 1992 (1992-02-20)<br>* abstract * | 1 | |
| A | EP 0 252 366 A (WOLMAN GMBH DR)<br>13 January 1988 (1988-01-13)<br>* examples * | 1,5 | |
| A | PATENT ABSTRACTS OF JAPAN<br>vol. 1997, no. 09,<br>30 September 1997 (1997-09-30)<br>& JP 09 136304 A (SUMITOMO CHEM CO<br>LTD;KEMIHORUTSU KK; OOSHIKA SHINKO KK),<br>27 May 1997 (1997-05-27)<br>* abstract * | | |

TECHNICAL FIELDS SEARCHED (Int.Cl.7)

The present search report has been drawn up for all claims

| Place of search | Date of completion of the search | Examiner |
|---|---|---|
| THE HAGUE | 20 March 2000 | Dalkafouki, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 12 4843

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2000

| Patent document cited in search report | | Publication date | Patent family member(s) | | Publication date |
|---|---|---|---|---|---|
| EP 0571846 | A | 01-12-1993 | DE 4217523 A | | 02-12-1993 |
| | | | AU 3856593 A | | 02-12-1993 |
| | | | BR 9302049 A | | 30-11-1993 |
| | | | CA 2096813 A | | 28-11-1993 |
| | | | FI 932369 A | | 28-11-1993 |
| | | | NO 931743 A | | 29-11-1993 |
| | | | NZ 247691 A | | 24-02-1995 |
| | | | PL 299077 A | | 29-11-1993 |
| | | | US 5389300 A | | 14-02-1995 |
| FR 1600399 | A | 20-07-1970 | NONE | | |
| JP 55094977 | A | 18-07-1980 | JP 1396776 C | | 24-08-1987 |
| | | | JP 62001428 B | | 13-01-1987 |
| US 5730907 | A | 24-03-1998 | US 5944880 A | | 31-08-1999 |
| DE 4122654 | A | 14-01-1993 | NONE | | |
| JP 4052101 | A | 20-02-1992 | NONE | | |
| EP 0252366 | A | 13-01-1988 | DE 3621361 A | | 14-01-1988 |
| | | | AT 64888 T | | 15-07-1991 |
| | | | GR 3002256 T | | 30-12-1992 |
| JP 09136304 | A | 27-05-1997 | NONE | | |

EPO FORM P0459